# EUROPÄISCHE PATENTANMELDUNG

(11) **EP 1 172 992 A2**
(43) Veröffentlichungstag der Anmeldung: **16.01.2002**
(21) Anmeldenummer: 01115328.5
(22) Anmeldetag: 25.06.2001
(51) Int. Cl.: H04M 3/42, H04M 3/46

(54) **Gruppentask-Konzept**

(30) Priorität: 10.07.2000 DE 10033439
(71) Anmelder: SIEMENS AKTIENGESELLSCHAFT, 80333 München (DE)
(72) Erfinder: Crevits, Luc, 8880 Tielt (BE); Demuynck, Frank, 8540 Kortrijke-Marke (BE); Lybeer, Roger, 9070 Destelbergen (BE); Schelfhout, Bettina, 1742 ternat (BE)

(57) **Zusammenfassung**

Die vorliegende Erfindung betrifft eine Telekommunikationsanlage (1) mit jeweils einer Endgerätesteuereinrichtung (3a,...,3n) für an die Telekommunikationsanlage (1) angeschlossene Endgeräte (2a,...,2n). Mehrere der Endgeräte (2a,...,2c) sind dabei zu einer Gruppe (5) zusammengefaßt, wobei eine Gruppensteuereinrichtung (6) zum übergeordneten Steuern von gruppen-relevanten Transaktionen vorgesehen ist.

Im weiteren betrifft die vorliegende Erfindung ein Verfahren zum Steuern von Transaktionen von Endgeräten (2a,...,2c) mit einer Telekommunikationsanlage (1).

## Beschreibung

Die vorliegende Erfindung betrifft eine Telekommunikationsanlage für ein privates Telekommunikationsnetz gemäß dem Oberbegriff des beigefügten Anspruches 1 und ein Verfahren zum Steuern von Transaktionen von der Telekommunikationsanlage zugeordneten Endgeräten gemäß dem Oberbegriff des beigefügten Anspruches 7.

Bei einer Benutzung eines einer Telekommunikationsanlage zugeordneten Kommunikationsendgerätes durch einen Teilnehmer wie beispielsweise die Annahme eines ankommenden Rufs, die Initialisierung eines abgehenden Rufs, die Aktivierung eines Leistungsmerkmals, usw. - werden in der Telekommunikationsanlage jeweils sogenannte Transaktionen generiert. Im Rahmen einer solchen Transaktion werden in der Telekommunikationsanlage transaktions-spezifische Daten gespeichert, die für die Steuerung der jeweiligen Transaktion benötigt werden.

In Fällen, in denen ein Teilnehmer bzw. das dem Teilnehmer zugeordnete Kommunikationsendgerät einer Gruppe von Benutzern - in der Literatur häufig als Anrufgruppe bezeichnet - zugeordnet ist, müssen zusätzlich zu den transaktions-spezifischen Daten Daten, welche die gesamte Gruppe betreffen, in der Telekommunikationsanlage gespeichert werden. Solche gruppen-spezifischen Daten sind beispielsweise Daten über den Status der Gruppe, der Belegungsstatus von der Gruppe zugeordneten Leitungen und Rufnummern.

In der Regel werden diese gruppen-spezifischen Daten individuell für jedes Kommunikationsendgerät durch eine jeweils einem Kommunikationsendgerät zugeordnete Endgerätesteuereinrichtung - in der Literatur häufig als Endgerätetask bezeichnet - verarbeitet, abgespeichert und ausgelesen. Dies bedingt, daß jede einzelne Endgerätesteuereinrichtung mit den jeweils anderen, der Gruppe von Kommunikationsendgeräten zugeordneten Endgerätesteuereinrichtungen kommuniziert und die Transaktionen (z. B. Speichern von Daten, Belegen von Rufnummern usw.) der jeweils anderen Endgerätesteuereinrichtung überwacht. Dadurch werden gruppen-spezifischen Daten jeweils an verschiedenen Stellen in der Telekommunikationsanlage lokal von den Endgerätesteuereinrichtungen der jeweiligen Kommunikationsendgeräte abgespeichert.

Ein Nachteil dieser Lösung besteht darin, daß durch die lokale Speicherung von gruppen-spezifischen Daten, die z. B. den Status der Gruppe anzeigen, Daten mehrfach in der Telekommunikationsanlage abgespeichert werden und somit unnötig Speicherplatz belegt wird. Weiterhin wird durch die gegenseitige Überwachung der Endgerätesteuereinrichtungen untereinander unnötig Prozessorleistung der Telekommunikationsanlage beansprucht.

Der vorliegenden Erfindung liegt daher die Aufgabe zugrunde, eine Telekommunikationsanlage und ein in dieser Telekommunikationsanlage angewendetes Verfahren zum Steuern von Transaktionen bereitzustellen, bei denen eine Einsparung von Ressourcen im Rahmen einer Durchführung von gruppen-spezifischen Transaktionen ermöglicht wird.

Gelöst wird die Aufgabe ausgehend von den Merkmalen des Oberbegriffs des Patentanspruchs 1 bzw. 7 durch deren kennzeichnenden Merkmale.

Gemäß der vorliegenden Erfindung werden Transaktionen, die eine Gruppe bzw. die der Gruppe zugeordneten Endgeräte betreffen, von einer übergeordneten Gruppensteuereinrichtung (einer sog. Gruppentask) gesteuert. Die Gruppensteuereinrichtung überwacht dabei die Transaktionen der einzelnen Endgerätesteuereinrichtungen (der sogenannten Endgerätetasks) und führt die erforderlichen Aktionen auf Gruppenebene durch.

Ein Vorteil der vorliegenden Erfindung besteht darin, daß Ressourcen der Telekommunikationsanlage - wie beispielsweise durch die Kommunikationsanlage zur Verfügung gestellte Prozessorleistung und Speicherplatz - gegenüber der Lösung nach dem Stand der Technik eingespart werden können, da eine gegenseitige Koordinierung der einzelnen durch die Endgerätesteuereinrichtungen gesteuerten Transaktionen durch die Vielzahl von Endgerätesteuereinrichtungen entfallen kann. Diese Aufgabe wird erfindungsgemäß von einer einzelnen übergeordneten Gruppensteuereinrichtung ausgeführt.

Vorteilhafte Ausgestaltungen der vorliegenden Erfindung sind in den Unteransprüchen wiedergegeben.

In einer vorteilhaften Ausgestaltung der vorliegenden Erfindung werden für die gesamte Gruppe relevante Daten - im folgenden als gruppen-spezifische Daten bezeichnet - in einer zentralen Speichervorrichtung durch die Gruppensteuereinrichtung abgespeichert und verwaltet. Außerdem werden Daten, die für das einzelne Endgeräte relevant sind, in einer lokalen Speichervorrichtung durch die jeweilige Endgerätesteuereinrichtung abgespeichert und verwaltet.

Die Gruppensteuereinrichtung kann gemäß der vorliegenden Erfindung eine passive und/oder eine aktive Funktion ausführen. Bei der passiven Funktion der Gruppensteuereinrichtung wird im Rahmen einer Transaktion beispielsweise durch eine Endgerätesteuereinrichtung (z. B. ein abgehender Ruf durch ein Kommunikationsendgerät) eine weitere Transaktion festgestellt, die eine Gruppe betrifft - im weiteren als Gruppentransaktion bezeichnet. Dabei wird die Gruppensteuereinrichtung durch die jeweilige Endgerätesteuereinrichtung aktiviert, d. h. die jeweilige Endgerätesteuereinrichtung übermittelt der Gruppensteuereinrichtung die Gruppentransaktion, woraufhin die Gruppensteuereinrichtung die erfindungsgemäße übergeordnete Steuerung und Koordination der Gruppentransaktion durchführt.

Bei der aktiven Funktion der erfindungsgemäßen Gruppensteuereinrichtung wird zuerst die Gruppensteuereinrichtung aktiviert, die wiederum die einzelnen Endgerätesteuereinrichtungen aktiviert. Dabei wird durch die Gruppensteuereinrichtung - beispielsweise bei einem ankommenden Ruf - eine Transaktion festgestellt, welche die gesamte Gruppe betrifft. Daraufhin steuert die Gruppensteuereinrichtung die erforderlichen Transaktionen mit den jeweiligen Endgerätesteuereinrichtungen.

Gemäß der vorliegenden Erfindung führt die jeweilige Endgerätesteuereinrichtung Transaktionen durch, die das jeweilige Endgerät betreffen, und die Gruppensteuereinrichtung Transaktionen, die eine bestimmte Rufnummer betreffen, wobei eine Rufnummer mehrere Endgeräte (Endgeräte einer Gruppe) betreffen kann.

Die vorliegende Erfindung kann beispielsweise zur Realisierung des Leistungsmerkmales "MULAP" (Multiple Line Appearance Group) einer Telekommunikationsanlage angewendet werden. Bei diesem Leistungsmerkmal kann ein bestimmtes Endgerät unter verschiedenen, vorher festgelegten Rufnummern erreicht werden. Abgehende Rufe können ebenfalls unter diesen Rufnummern initialisiert werden. Diese Rufnummern sind dabei für mehrere Endgeräte gültig, die auf diese Weise zu einer Gruppe zusammengefaßt sind.

Die vorliegende Erfindung wird nachfolgend anhand eines bevorzugten Ausführungsbeispieles unter Bezug auf die beigefügte Zeichnung näher erläutert.

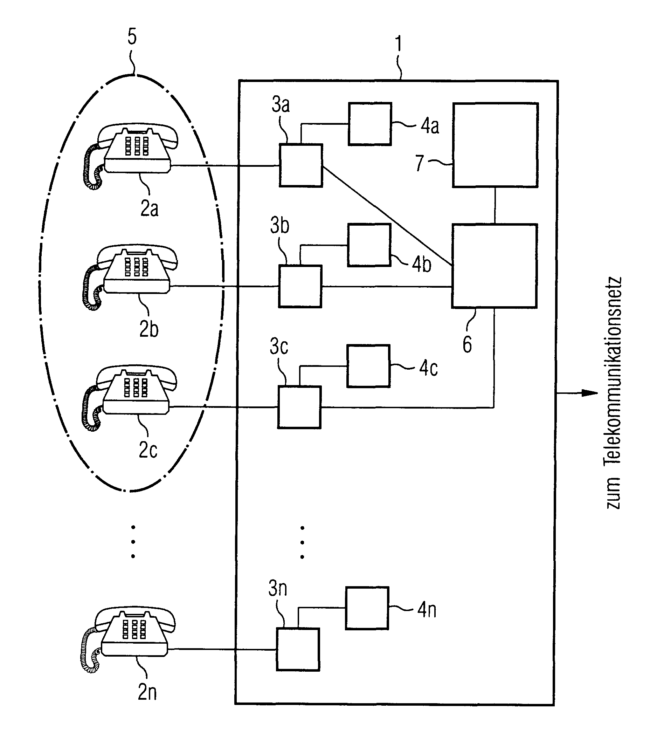

Die Fig. 1 zeigt dabei eine schematische Darstellung der erfindungsgemäßen Telekommunikationsanlage.

Fig. 1 zeigt eine schematische Darstellung einer erfindungsgemäßen Telekommunikationsanlage 1 mit daran angeschlossenen Kommunikationsendgeräten 2a,...,2n. Ein Teil der Kommunikationsendgeräte 2a,...,2n - im vorliegenden Ausführungsbeispiel die Kommunikationsendgeräte 2a,...,2c - sind zu einer Gruppe 5 - in der Figur durch die gestrichelte Linie veranschaulicht - zusammengefaßt.

Weiterhin zeigt Fig. 1 jeweils den Kommunikationsendgeräten 2a,...,2n zugeordnete Endgerätesteuereinrichtungen 3a,...,3n (sogenannte Endgerätetasks) zur Steuerung von den Kommunikationsendgeräten 2a,...,2n zugeordneten Transaktionen und den Endgerätesteuereinrichtungen 3a,...,3n zugeordnete lokale Speichervorrichtungen 4a,...,4n zur lokalen Speicherung von einem jeweiligen Kommunikationsendgerät 2a,...,2n zugeordneten transaktions-spezifischen Daten. Des weiteren umfaßt die Telekommunikationsanlage 1 eine erfindungsgemäße Gruppensteuereinrichtung 6 (eine sogenannte Gruppentask) zur übergeordneten Steuerung von der Gruppe 5 zugehörigen Endgerätesteuereinrichtungen 3a,...,3c und eine zentrale Speichervorrichtung 7 zum zentralen Speichern von gruppen-relevanten Daten.

Die Endgerätesteuereinrichtungen 3a,...,3n und die erfindungsgemäße Gruppensteuereinrichtung 6 sind dabei Bestandteil einer in der Telekommunikationsanlage 1 implementierten Steuerungssoftware. Die Begriffe "lokales Speichern" und "zentrales Speichern" bezeichnen im wesentlichen die Speicherzugriffe der entsprechenden Einrichtungen der Telekommunikationsanlage 1, d. h. "lokales Speichern" die Speicherzugriffe der jeweiligen Endgerätesteuereinrichtungen 3a,...,3n auf die lokalen Speichervorrichtungen 4a,...,4n und "zentrales Speichern" die Speicherzugriffe der Gruppensteuereinrichtung 6 auf die zentrale Speichervorrichtung 7. Mit diesen Begriffen wird somit nicht die physikalische, räumliche Aufteilung des Speichers bezeichnet, sondern die den Speicherzugriff ausführende Einrichtung.

Die vorliegende Erfindung wird nachfolgend anhand des sogenannten Leistungsmerkmales "MULAP" unter Bezug auf Fig. 1 verdeutlicht.

Das Leistungsmerkmal "MULAP" bezeichnet ein Leistungsmerkmal, bei welchem die der Gruppe 5 zugeordneten Kommunikationsendgeräte 2a,...,2c unter mehreren der Gruppe 5 zugeordneten Rufnummern erreichbar sind. Jedes einzelne dieser Kommunikationsendgeräte 2a,...,2c kann dabei abgehende Rufe unter einer dieser Rufnummern initialisieren, wobei durch den jeweiligen Benutzer durch Tastendruck festgelegt wird, unter welcher Rufnummer der abgehende Ruf initialisiert wird. Dabei müssen gruppen-relevanten Daten, wie z.B. Daten über die Belegung der zur Verfügung stehenden Rufnummer und der Status der Gruppe 5, in der Telekommunikationsanlage 1 abgespeichert werden. Zu diesem Zweck wird durch die Gruppensteuereinrichtung 6 eine Transaktion generiert, die diese gruppen-spezifischen Daten zentral in der zentralen Speichervorrichtung 7 abspeichert und die zugehörigen Transaktionen der jeweiligen Endgerätesteuereinrichtungen 3a,...,3c entsprechend steuert. Im Fall einer MULAP-Gruppe zeigen diese Daten beispielsweise die Belegung einer MULAP-Leitung, d.h. die dieser Leitung zugeordnete Rufnummer, durch ein Kommunikationsendgerät 2a,...,2c an, wodurch diese MULAP-Leitung bis zur Freigabe von keinem anderen Kommunikationsendgerät 2a,...,2c benutzt werden kann.

Die Steuerung und Koordinierung der einzelnen Endgerätesteuereinrichtungen 3a,...,3c erfolgt mittels eines Broadcast-Mechanismus, bei dem jede Endgerätesteuereinrichtung 3a,...,3c durch die Gruppensteuereinrichtung 6 überwacht wird. Die Gruppensteuereinrichtung 6 registriert dabei, wenn eine gruppen-spezifische Transaktion durchzuführen ist. Beispielsweise kann durch die Gruppensteuereinrichtung 6 eine LED-Signalisierung an den einzelnen Kommunikationsendgeräten 2a,...,2c der Gruppe 5 auf diese Weise zentral aktiviert werden, um anzuzeigen, daß eine bestimmte MULAP-Leitung, d.h. die dieser Leitung zugeordnete Rufnummer, belegt ist.

In einer Ausgestaltung der vorliegenden Erfindung besitzt die Gruppensteuereinrichtung 6 eine aktive Funktion, wobei die Gruppensteuereinrichtung 6 durch eine gruppen-spezifische Transaktion, welche die Gruppe 5 betrifft, aktiviert wird. Die Gruppensteuereinrichtung 6 informiert daraufhin die entsprechenden Endgerätesteuereinrichtungen 3a,...,3c über durchzuführende Transaktionen. Beispielsweise entscheidet die Gruppensteuereinrichtung 6 bei einem an der Gruppe 5 ankommenden Ruf darüber, welches der Kommunikationsendgeräte 2a,...,2c optisch und/oder akustisch über den ankommenden Ruf zu informieren ist.

In einer weiteren Ausgestaltung der vorliegenden Erfindung weist die erfindungsgemäße Gruppensteuereinrichtung 6 eine passive Funktion auf. Dabei registriert die Gruppensteuereinrichtung 6 eine Transaktion einer Endgerätesteuereinrichtung 3a,...,3c und führt nachfolgend entsprechende Steuerungen der Endgerätesteuereinrichtungen 3a,...,3c durch. Diese Lösung hat gegenüber der aktiven Funktion der Gruppensteuereinrichtung 6 den Vorteil, daß bei einer Implementierung des erfindungsgemäßen Verfahrens in bereits bestehenden Systemen weniger Änderungen notwendig sind.

In beiden Ausgestaltungen werden zwei Tasks belegt. Zum einen wird die Gruppensteuereinrichtung 6 und zum anderen jeweils eine Endgerätesteuereinrichtung 3a,...,3c für jedes betroffene Kommunikationsendgerät 2a,...,2c belegt. Dabei werden Daten, die für das jeweilige Kommunikationsendgerät 2a,...,2c relevant sind, von der jeweiligen Endgerätesteuereinrichtung 3a,...,3c verarbeitet und Daten, die für die gesamte Gruppe relevant sind, von der Gruppensteuereinrichtung 6.

Die erfindungsgemäße Gruppensteuereinrichtung 6 wird vorteilhafterweise als Bestandteil der Software zur Verbindungssteuerung - in der Literatur häufig mit 'Call Processing' bezeichnet - der Telekommunikationsanlage 1 als übergeordnete Ebene über den Endgerätesteuereinrichtung 3a,...,3c realisiert.

Die Kommunikationsendgeräte 2a,...,2n können dabei herkömmliche Telefonapparate sein, die über eine kommunikations-orientierte Anschlußleitung - beispielsweise eine ISDN-Leitung mit der Telekommunikationsanlage 1 verbunden sind. Alternativ können die Kommunikationsendgeräte 2a,...,2n durch Datenverarbeitungseinrichtungen realisiert sein, die über ein Rechnernetz - beispielsweise ein Local Area Network LAN - an die Telekommunikationsanlage 1 angeschlossen sind.

## Patentansprüche

1. Telekommunikationsanlage (1) zum Anschluß von Endgeräten (2a,...,2n), mit
jeweils einer Endgerätesteuereinrichtung (3a,...,3n) für jedes Endgerät (2a,...,2n) zum Steuern von endgeräte-spezifischen Transaktionen, wobei mehrere Endgeräte (2a,...,2c) zu einer Gruppe (5) zusammengefaßt sind,
**gekennzeichnet durch**
eine Gruppensteuereinrichtung (6) zum übergeordneten Steuern von gruppen-relevanten Transaktionen, wobei die Gruppensteuereinrichtung (6) die einzelnen Endgerätesteuereinrichtungen (3a,...,3c) der Endgeräte (2a,...,2c) einer Gruppe (5) steuert.

2. Telekommunikationsanlage (1) gemäß Anspruch 1,
**gekennzeichnet durch**
eine zentrale Speichervorrichtung (7) zum zentralen Speichern von Daten, die die Transaktionen der Gruppe (5) betreffen, **durch** die Gruppensteuereinrichtung (6), und
jeweils eine lokale Speichervorrichtung (4a...4n) zum lokalen Speichern von Daten, die die Transaktionen eines Endgerätes (2a,...,2n) betreffen, **durch** die jeweilige Endgerätesteuereinrichtung (3a,...,3n).

3. Telekommunikationsanlage (1) gemäß Anspruch 1 oder 2,
**dadurch gekennzeichnet,**
**daß** die Gruppensteuereinrichtung (6) Transaktionen für das Leistungsmerkmal "Mulap" der Telekommunikationsanlage (1) steuert.

4. Telekommunikationsanlage (1) gemäß einem der Ansprüche 1 bis 3,
**dadurch gekennzeichnet,**
**daß** die Gruppensteuereinrichtung (6) die jeweiligen Endgerätesteuereinrichtungen (3a,...,3c) der Endgeräte (2a,...,2c) einer Gruppe (6) aktiviert.

5. Telekommunikationsanlage (1) gemäß einem der Ansprüche 1 bis 3,
**dadurch gekennzeichnet,**
**daß** die jeweiligen Endgerätesteuereinrichtungen (3a,...,3c) die Gruppensteuereinrichtung (6) aktiviert.

6. Telekommunikationsanlage (1) gemäß einem der Ansprüche 1 bis 5,
**dadurch gekennzeichnet,**
**daß** die Gruppensteuereinrichtung (6) einer bestimmten Rufnummer der Telekommunikationsanlage (1) zugeordnet ist.

7. Verfahren zum Steuern von Transaktionen von Endgeräten (2a,...,2n) mit einer Telekommunikationsanlage (1),
wobei Transaktionen, die das jeweilige Endgerät (2a,...,2n) betreffen, durch eine jeweils Endgerätesteuereinrichtung (3a,...,3n) gesteuert werden und mehrere Endgeräte (2a,...,2c) eine Gruppe (5) bilden,
**gekennzeichnet durch**
eine übergeordnete Steuerung von gruppen-relevanten Transaktionen wobei die einzelnen Endgerätesteuereinrichtungen (3a,...,3c) der Endgeräte (2a,..,.2c) zentral gesteuert werden.

8. Verfahren gemäß Anspruch 7,
**gekennzeichnet durch**
eine zentrale Speicherung von Daten, die die Transaktionen der Gruppe (5) betreffen, und
jeweils eine lokale Speicherung von Daten, die die Transaktionen eines Endgerätes (2a,...,2n) betreffen.

9. Verahren gemäß Anspruch 7 oder 8,
**dadurch gekennzeichnet,**
**daß** Transaktionen für das Leistungsmerkmal "Mulap" der Telekommunikationsanlage (1) gesteuert werden.
